# EUROPEAN PATENT APPLICATION

(11) **EP 2 911 045 A1**
(43) Date of publication of application: **26.08.2015**
(21) Application number: 13800466.8
(22) Date of filing: 13.06.2013
(51) Int. Cl.: G06F 3/048

(54) **METHOD AND DEVICE FOR CONTROLLING SWITCHING OF VIRTUAL NAVIGATION BAR**

(30) Priority: 16.10.2012 CN 201210392460
(71) Applicant: ZTE Corporation, Shenzhen, Guangdong 518057 (CN)
(72) Inventor: XIANG, Bingxin, Shenzhen Guangdong 518057 (CN); MEI, Qin, Shenzhen Guangdong 518057 (CN); ZHANG, Hongwei, Shenzhen Guangdong 518057 (CN); WANG, Chong, Shenzhen Guangdong 518057 (CN)
(74) Representative: Modiano, Micaela Nadia
(86) International application number: PCT/CN2013/077131
(87) International publication number: WO 2013/182084

(57) **Abstract**

A method and device for controlling switching of a virtual navigation bar, wherein the method includes: a terminal device receiving a command for displaying a virtual navigation bar or a command for hiding a virtual navigation bar from a user; after receiving the command for displaying a virtual navigation bar or the command for hiding a virtual navigation bar from the user, the terminal device determining display objects of a display content in a window, re-rendering and refreshing the display content in the current window, wherein, upon receiving the command for displaying a virtual navigation bar from the user, the display objects of the display content in the window contain a display object of the virtual navigation bar; and upon receiving the command for hiding a virtual navigation bar from the user, the display objects of the display content in the window do not contain the display object of the virtual navigation bar. In this solution, a dynamic switching of the virtual navigation bar is achieved with one key, thus significantly improving the usability of this feature and greatly facilitating the user operation experience; furthermore, the technology has a strong portability, thus facilitating its commercialization, promotion and application on a large scale.

## Description

### Technical Field

The present invention relates to the technical field of a terminal device with a display screen, and more particularly, to a method and device for controlling switching of a virtual navigation bar.

### Background of the Related art

With the release of Android 4.0, the virtual navigation bar gradually replaces hard keys and becomes the mainstream navigation manner of the mobile phone. This manner solves the problem of excessive wear of the phone keys caused by frequently using the hard keys, and extends the life of the mobile phone. Meanwhile, removing the hard keys of the mobile phone can also save the cost of the mobile phone to a certain extent.

Therefore, the large touch-screen smart phone uses a virtual navigation bar more and more to replace the hard keys, although this manner has some advantages, but dividing the screen into certain areas to simulate the hard key operation will undoubtedly make the using space of the screen smaller, the size of the screen is greatly reduced. Especially for some multimedia applications that require full-screen operations, virtual navigation keys may cause misoperation of the user, which greatly degrades the user experience.

At present, for some third-party software tools, in the case that the system permission is acquired, the virtual navigation bar can be hidden or displayed by modifying the system configuration file and rebooting the mobile phone, but the dynamic switching display control of the display of the virtual navigation bar cannot be performed without rebooting the terminal device. If the existing third-party software tool scheme is used, the user needs to frequently reboot the mobile phone when using, which will reduce the availability of the scheme, for example, in some game scenarios, the user needs to close the virtual navigation bar to play a full-screen game, of course, the user does not want to reboot the mobile phone; likewise, a general user does not know how to crack the system, acquire the system permission, and even modify the system configuration file. Therefore, the feasibility of the existing third-party software scheme is poor in practical use, and the user experience is very poor.

### Summary of the Invention

The embodiment of the present invention provides a method and device for controlling switching of virtual navigation bar, to make the user freely select to display or hide the virtual navigation bar without rebooting the device.

The embodiment of the present invention provides a method for controlling switching of a virtual navigation bar, comprising:
a terminal device receiving a command for displaying a virtual navigation bar or a command for hiding a virtual navigation bar from a user; and
after receiving the command for displaying a virtual navigation bar or the command for hiding a virtual navigation bar from the user, the terminal device determining display objects of a display content in a window, re-rendering and refreshing the display content in the window, wherein, when receiving the command for displaying a virtual navigation bar from the user, the display objects of the display content in the window comprise a display object of the virtual navigation bar; when receiving the command for hiding a virtual navigation bar from the user, the display objects of the display content in the window do not comprise the display object of the virtual navigation bar.

Alternatively, the step of the terminal device determining display objects of a display content in the window comprises:
upon receiving the command for displaying a virtual navigation bar from the user, the terminal device adding a display object of the virtual navigation bar, and modifying a display state value in a state configuration file corresponding to the virtual navigation bar to indicate currently displaying the virtual navigation bar; upon receiving the command for hiding a virtual navigation bar from the user, deleting the display object of the virtual navigation bar and modifying the display state value in the state configuration file corresponding to the virtual navigation bar to indicate currently hiding the virtual navigation bar.

Alternatively, the step of the terminal device re-rendering and refreshing the display content in the window comprises:
the terminal device reading out the display state value from the state configuration file corresponding to the virtual navigation bar, and displaying or hiding the virtual navigation bar in the window according to the display state value.

Alternatively, the method further comprises:
when adding the display object of the virtual navigation bar, the terminal device setting a display height of the virtual navigation bar as an actual display height; when deleting the display object of the virtual navigation bar, setting the display height of the virtual navigation bar as zero.

Alternatively, the step of the terminal device reading out the display state value from the state configuration file corresponding to the virtual navigation bar, and displaying or hiding the virtual navigation bar in the window according to the display state value comprises:
the terminal device reading out the display state value from the state configuration file corresponding to the virtual navigation bar, and determining the display height of the virtual navigation bar according to the display state value; and re-rendering and refreshing a height and area of the display content in the window according to the display height of the virtual navigation bar and the display state value.

The embodiment of the present invention further provides a device for controlling switching of a virtual navigation bar, applied to a terminal device, wherein, the device comprises: an external control switching unit, a command monitoring and distributing unit and a command executing unit, wherein:
the external control switching unit is configured to: receive a command for displaying a virtual navigation bar or a command for hiding a virtual navigation bar from a user, and sending an external control command for displaying or hiding the virtual navigation bar to the command monitoring and distributing unit;
the command monitoring and distributing unit is configured to: after monitoring the external control command for displaying or hiding the virtual navigation bar, send a switching control command to the command executing unit; and
the command executing unit is configured to: after receiving the switching control command, determine display objects of a display content in the window, re-render and refresh the display content in the window, wherein, upon receiving the command for displaying a virtual navigation bar from the user, the display objects of the display content in the window comprise a display object of the virtual navigation bar; upon receiving the command for hiding a virtual navigation bar, the display objects of the display content in the window do not comprise the display object of the virtual navigation bar.

Alternatively, the command executing unit is further configured to: after receiving the switching control command, determine that a command type of the switching control command is displaying or hiding the virtual navigation bar.

Alternatively, the command executing unit is configured to: when the command type of the switching control command is displaying the virtual navigation bar, add a display object of the virtual navigation bar, and modify a display state value in a state configuration file corresponding to the virtual navigation bar to indicate currently displaying the virtual navigation bar; when the command type of the switching control command is hiding the virtual navigation bar, delete the display object of the virtual navigation bar, and modify the display state value in the state configuration file corresponding to the virtual navigation bar to indicate currently hiding the virtual navigation bar.

Alternatively, the device further comprises a window manager, wherein:
the command executing unit is further configured to: call a refreshing function interface for window management, and send a refreshing display request command to the window manager;
the window manager is configured to: request to re-render the display objects in the window and re-enter into a re-rendering window display process according to the refreshing display request command.

Alternatively, the command executing unit is further configured to: when adding the display object of the virtual navigation bar, set a display height of the virtual navigation bar as an actual display height; when deleting the display object of the virtual navigation bar, set the display height of the virtual navigation bar as zero;
the window manager is further configured to: read out the display state value from the state configuration file corresponding to the virtual navigation bar, and determine the display height of the virtual navigation bar according to the display state value; and re-render and refresh a height and area of the display content in the window in accordance with the display height of the virtual navigation bar and the display state value.

In summary, this scheme performs dynamic optimization processing for the switching of the virtual navigation bar, to make the user freely and dynamically perform the display/hide switching of a virtual navigation bar with no need of acquiring the system permission, modifying the original configuration information of the system, rebooting the device, or even exiting the application currently displayed on the screen. The user's current operation may not be interrupted by dynamically switching the virtual navigation bar, thus avoiding the need of rebooting the device for each switching, meanwhile, it can increase the display area of the screen, and it does not need to crack the system to acquire the system permission, thereby significantly enhancing the user experience and the practicability of the scheme. The dynamic switching of virtual navigation bar can be achieved with one key, thus greatly improving the usability of this feature and greatly facilitating the user's operation experience; moreover, the portability of this technology is strong, thus facilitating its commercialization, promotion and application on a large scale.

### Brief Description of the Drawings

FIG. 1 is a schematic diagram of a device for controlling switching of a virtual navigation bar in accordance with the present embodiment.
FIG. 2 is a flow chart of a method for controlling switching of a virtual navigation bar in accordance with the present embodiment.
FIG. 3 is a schematic diagram of a comparison of the effect of dynamically switching the virtual navigation bar in accordance with the present embodiment.

### Preferred Embodiments of the Invention

Considering that displaying or hiding the virtual navigation bar implemented by the existing third-party must acquire the system permission, modify the configuration file which cracks the system, and the switching can be performed only by rebooting the terminal device, which greatly reduces the practicability and user experience, and also is not beneficial to large-scale commercialization and promotion of the technology. In the present embodiment, the user uses the external control switching unit of the terminal device to select the operation of hiding or displaying the virtual navigation bar. The terminal device dynamically refreshes the screen and re-renders the window according to the command for displaying a virtual navigation bar or the command for hiding a virtual navigation bar from the user, and the switching of displaying or hiding the virtual navigation bar does not require the user to reboot the terminal device.

The method for switching a virtual navigation bar according to the present embodiment comprises the following steps.

In step one, the user uses an external control switching unit of the terminal device to select an operation of hiding or displaying the virtual navigation bar, the external control switch receives a command for displaying or hiding a virtual navigation bar from the user, sends an external control command for displaying or hiding the virtual navigation bar to the command monitoring and distributing unit of the terminal device.

In step two, after monitoring the external control command for displaying or hiding the virtual navigation bar, the command monitoring and distributing unit sends a switching control command to the command executing unit of the terminal device.

In step three, the command executing unit re-renders and refreshes the display content in the window according to the switching control command received from the command monitoring and distributing unit to complete hiding or displaying of the virtual navigation bar, to achieve the dynamic switching effect.

Hereinafter, in conjunction with the accompanying figures, the embodiments of the present invention will be fully described, it should be understood that the specific embodiments described in the present invention are only used to explain but not limit the present invention.

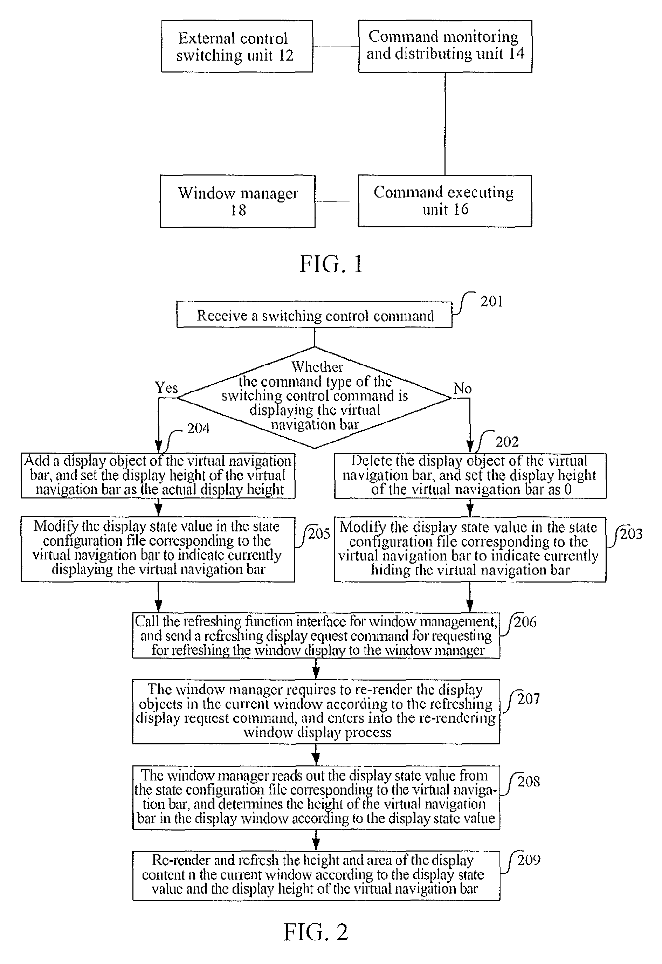

As shown in FIG. 1, the device for controlling switching of a virtual navigation bar in accordance with the present embodiment comprises three main functional modules, i.e., an external control switching unit 12, a command monitoring and distributing unit 14 and a command executing unit 16, wherein, the command executing unit 16 is the core control module, and the basic functions of these three unit modules are described as follows.

The external control switching unit 12 is an external port providing the switching function for the user to operate, the user can send an external control command for displaying or hiding the virtual navigation bar through the external control switching unit 12, to decide the display or hiding of the virtual navigation bar. The external control switching unit 12 is configured to: receive the command for displaying the virtual navigation bar or the command for hiding the virtual navigation bar from the user, and send an external control command for displaying or hiding the virtual navigation bar to the command monitoring and distributing unit 14.

The command monitoring and distributing unit 14 is configured to: be responsible for monitoring whether the external control switching unit 12 sends an external control command or not, upon receiving an external control command for displaying or hiding the virtual navigation bar, convert the received external control command into an internal switching control command, and distribute the switching control command to the command executing unit 16 to perform control processing.

The command executing unit 16 is configured to: execute the switching control command, that is, be responsible for the dynamic switching display control of the virtual navigation bar. After receiving the switching control command, the command executing unit 16 determines the display objects of the display content in the window, re-renders and refreshes the display content in the window, wherein, upon receiving the command for displaying the virtual navigation bar from the user, the display objects of the display content in the window comprise a display object of the virtual navigation bar; upon receiving the command for hiding the virtual navigation bar from the user, the display objects of the display content in the window do not comprise the display object of the virtual navigation bar.

The command executing unit 16 is further configured to: determine the command type of the switching control command as displaying or hiding the virtual navigation bar, when the command type of the switching control command is displaying the virtual navigation bar, add a display object of the virtual navigation bar, and modify the display state value in the state configuration file corresponding to the virtual navigation bar to indicate currently displaying the virtual navigation bar; when the command type of the switching control command is hiding the virtual navigation bar, delete the display object of the virtual navigation bar, and modify the display state value in the state configuration file corresponding to the virtual navigation bar to indicate currently hiding the virtual navigation bar; and call the refreshing function interface for window management, and send a refreshing request command to request for refreshing the display in the window to the window manager 18.

The command executing unit 16 is further configured to: when adding the display object of the virtual navigation bar, set the display height of the virtual navigation bar as the actual display height; when deleting the display object of the virtual navigation bar, set the display height of the virtual navigation bar as zero.

The window manager 18 is configured to: according to the refreshing display request command, request to re-render the display objects in the window, and enter into the re-rendering window display process; read out the display state value from the state configuration file corresponding to the virtual navigation bar, and determine the display height of the virtual navigation bar in the window in accordance with the display state value; and according to the display status value and the display height of the virtual navigation bar, re-render and refresh the height and area of the display content in the window to obtain the display effect after-dynamically switching.

As shown in FIG. 2, the method for controlling switching of a virtual navigation bar in accordance with the present embodiment comprising the following steps:
in step S201, after receiving a switching control command, the command executing unit judges whether the command type of the switching control command is displaying or hiding the virtual navigation bar, if the command type is displaying the virtual navigation bar, step S204 is executed, if the command type is hiding the virtual navigation bar, step S202 is executed.

In step S202, when the command type of the received switching control command is hiding the virtual navigation bar, the command executing unit deletes the display object of the virtual navigation bar, and sets the display height of the virtual navigation bar as 0, then step S203 is executed.

In step S203, the command executing unit modifies the display state value in the state configuration file corresponding to the virtual navigation bar to indicate currently hiding the virtual navigation bar, for example, the state value is set as 0, and step 206 is executed.

In step S204, the command executing unit adds a display object of the virtual navigation bar when the command type of the received switching control command is displaying the virtual navigation bar, and sets the display height of the virtual navigation bar as the actual display height, and then step S205 is executed.

In step S205, the command executing unit modifies the display state value in the state configuration file corresponding to the virtual navigation bar to indicate currently displaying the virtual navigation bar, for example, the state value is set as 1, and step 206 is executed.

In step S206, the command executing unit calls the refreshing function interface for window management, and sends a refreshing display request command for requesting for refreshing the window display to the window manager.

In step S207, the window manager requires to re-render the display objects in the window according to the refreshing display request command, and enters into the re-rendering window display process.

In step S208, the window manager reads out the display state value from the state configuration file corresponding to the virtual navigation bar, and determines the display height of the virtual navigation bar in the window based on the display state value.

In step S209, the window manager re-renders and refreshes the height and area of the display content in the current window according to the display state value and the display height of the virtual navigation bar to obtain the display effect after dynamically switching.

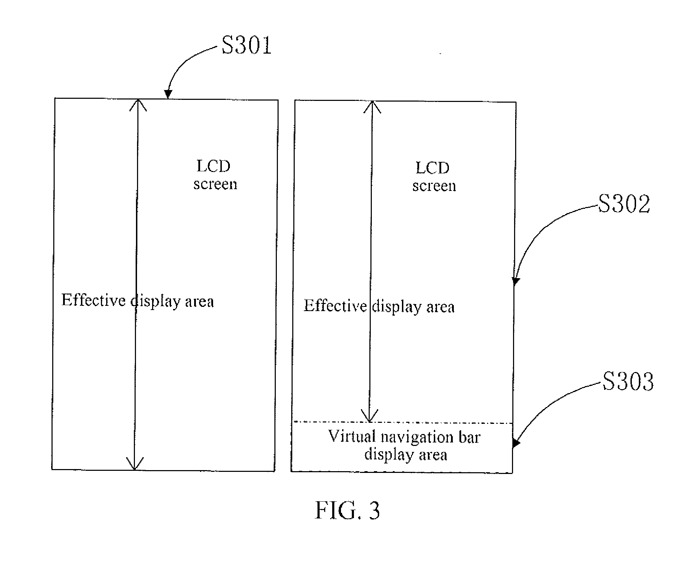

FIG. 3 shows a schematic diagram of a comparison of the dynamic switching effect in accordance with the present embodiment:
S301 and S302 respectively represent two LCD (Liquid Crystal Display) touch screens with the same size, S303 represents the display area occupied by the virtual navigation bar, by comparing the effective display areas of the S301 and the S302, it can be seen that, since the S301 hides the virtual navigation bar, the display area of the S301 is significantly larger than the display area of the S302. Therefore in the case of the same hardware cost, the scheme of the present embodiment can be used to increase the display area and to enhance the user experience of the terminal device display.

Obviously, a person skilled in the art should understand that the respective modules or steps of the present invention can be implemented with general-purpose computing devices, they can be integrated on a single computing device or distributed in a network consisting of multiple computing devices, alternatively, they may be executed by program codes executable by computing devices, so that they can be stored in storage means and executed by computing devices, and in some cases, the illustrated or described steps can be performed in a different order, or they can be made into individual integrated circuit modules, or some of the modules or steps can be made into a single integrated circuit module to implement. Therefore, the present invention is not limited to any specific hardware and software combination.

The above description is only for preferred embodiments of the present invention, and it is not used to limit the present invention, and for those skilled in the art, the embodiment of the present invention may have various modifications and changes. Any modifications, equivalent replacements and improvements made within the spirit and principle of the present invention should be within the claims of the present invention.

### Industrial Applicability

In the present scheme, by dynamically switching the virtual navigation bar, the user's current operation may not be interrupted, thus avoiding the need of rebooting the device for each switching, meanwhile, it can increase the display area of the screen, and it does not need to crack the system to acquire the system permission, thereby significantly enhancing the user experience and the practicability of the scheme. The dynamic switching of virtual navigation bar can be achieved with one key, thus greatly improving the usability of this feature and greatly facilitating the user's operation experience; moreover, the portability of this technology is strong, thus facilitating its commercialization, promotion and application on a large scale.

## Claims

1. A method for controlling switching of a virtual navigation bar, comprising:
a terminal device receiving a command for displaying a virtual navigation bar or a command for hiding a virtual navigation bar from a user; and
after receiving the command for displaying a virtual navigation bar or the command for hiding a virtual navigation bar from the user, the terminal device determining display objects of a display content in a window, re-rendering and refreshing the display content in the window, wherein, when receiving the command for displaying a virtual navigation bar from the user, the display objects of the display content in the window comprise a display object of the virtual navigation bar; when receiving the command for hiding a virtual navigation bar from the user, the display objects of the display content in the window do not comprise the display object of the virtual navigation bar.

2. The method of claim 1, wherein, the step of the terminal device determining display objects of a display content in the window comprises:
upon receiving the command for displaying a virtual navigation bar from the user, the terminal device adding a display object of the virtual navigation bar, and modifying a display state value in a state configuration file corresponding to the virtual navigation bar to indicate currently displaying the virtual navigation bar; upon receiving the command for hiding a virtual navigation bar from the user, deleting the display object of the virtual navigation bar and modifying the display state value in the state configuration file corresponding to the virtual navigation bar to indicate currently hiding the victual navigation bar.

3. The method of claim 2, wherein, the step of the terminal device re-rendering and refreshing the display content in the window comprises:
the terminal device reading out the display state value from the state configuration file corresponding to the virtual navigation bar, and displaying or hiding the virtual navigation bar in the window according to the display state value.

4. The method of claim 3, further comprising:
when adding the display object of the virtual navigation bar, the terminal device setting a display height of the virtual navigation bar as an actual display height; when deleting the display object of the virtual navigation bar, setting the display height of the virtual navigation bar as zero.

5. The method of claim 4, wherein, the step of the terminal device reading out the display state value from the state configuration file corresponding to the virtual navigation bar, and displaying or hiding the virtual navigation bar in the window according to the display state value comprises:
the terminal device reading out the display state value from the state configuration file corresponding to the virtual navigation bar, and determining the display height of the virtual navigation bar according to the display state value; and re-rendering and refreshing a height and area of the display content in the window according to the display height of the virtual navigation bar and the display state value.

6. A device for controlling switching of a virtual navigation bar, applied to a terminal device, wherein, the device comprises: an external control switching unit, a command monitoring and distributing unit and a command executing unit, wherein:
the external control switching unit is configured to: receive a command for displaying a virtual navigation bar or a command for hiding a virtual navigation bar from a user, and sending an external control command for displaying or hiding the virtual navigation bar to the command monitoring and distributing unit;
the command monitoring and distributing unit is configured to: after monitoring an external control command for displaying or hiding the virtual navigation bar, send a switching control command to the command executing unit; and
the command executing unit is configured to: after receiving the switching control command, determine display objects of a display content in the window, re-render and refresh the display content in the window, wherein, upon receiving the command for displaying a virtual navigation bar from the user, the display objects of the display content in the window comprise a display object of the virtual navigation bar; upon receiving the command for hiding a virtual navigation bar, the display objects of the display content in the window do not comprise the display object of the virtual navigation bar.

7. The device of claim 6, wherein:
the command executing unit is further configured to: after receiving the switching control command, determine that a command type of the switching control command is displaying or hiding the virtual navigation bar.

8. The device of claim 7, wherein:
the command executing unit is configured to: when the command type of the switching control command is displaying the virtual navigation bar, add a display object of the virtual navigation bar, and modify a display state value in a state configuration file corresponding to the virtual navigation bar to indicate currently displaying the virtual navigation bar; when the command type of the switching control command is hiding the virtual navigation bar, delete the display object of the virtual navigation bar, and modify the display state value in the state configuration file corresponding to the virtual navigation bar to indicate currently hiding the virtual navigation bar.

9. The device of claim 8, further comprising a window manager, wherein:
the command executing unit is further configured to: call a refreshing function interface for window management, and send a refreshing display request command to the window manager;
the window manager is configured to: request to re-render the display objects in the window and re-enter into a re-rendering window display process according to the refreshing display request command.

10. The device of claim 9, wherein:
the command executing unit is further configured to: when adding the display object of the virtual navigation bar, set a display height of the virtual navigation bar as an actual display height; when deleting the display object of the virtual navigation bar, set the display height of the virtual navigation bar as zero;
the window manager is further configured to: read out the display state value from the state configuration file corresponding to the virtual navigation bar, and determine the display height of the virtual navigation bar according to the display state value; and re-render and refresh a height and area of the display content in the window according to the display height of the virtual navigation bar and the display state value.
